# EUROPEAN PATENT APPLICATION

(11) **EP 0 992 881 A1**
(43) Date of publication of application: **12.04.2000**
(21) Application number: 98402459.6
(22) Date of filing: 06.10.1998
(51) Int. Cl.: G06F 7/00, G06F 9/38

(54) **A processor**

(71) Applicant: TEXAS INSTRUMENTS INC., Dallas, Texas 75243 (US); TEXAS INSTRUMENTS FRANCE, 06271 Villeneuve Loubet Cédex (FR)
(72) Inventor: Laurenti, Gilbert, 06570 Saint Paul de Vence (FR); Ponsot, Eric, 06140 Vence (FR); Djafarian, Karim, 453 boulevard de la Reine Jeanne, 06140 Vence (FR)
(74) Representative: Potter, Julian Mark

(57) **Abstract**

A data processing apparatus is described which includes a split stack comprising first and second parts. The first part is a register disposed in the processing core of the data processing apparatus, and the second part is a memory device disposed external of the processing core. The processing machine operates to couple the first part to the second part for transferring respective content of said first part and said second part between the first and second parts. A further register may be provided which temporarily stores data from the first part during transfer to the second part.

## Description

### FIELD OF INVENTION

The present invention relates to data processing apparatus, and in particular but not exclusively, to data processing apparatus comprising a stack register.

### BACKGROUND OF INVENTION

Many different types of data processing apparatus are known, of which microprocessors are but one example. For example, Digital Signal Processors (DSPs) are widely used, in particular for specific applications. DSPs are typically configured to optimise the performance of the applications concerned and to achieve this they employ more specialised execution units and instruction sets. They have not, however, been provided with the parallel instruction execution architectures found in microprocessors and do not operate under the operating systems used to control such microprocessors.

In a DSP or microprocessor for example, machine-readable instructions stored in a program memory are sequentially executed by the data processing apparatus in order for the data processing apparatus to perform operations or functions. The sequence of machine-readable instructions is termed a "program". Although the program instructions are typically performed sequentially, certain instructions permit the program sequence to be broken, and for the program flow to "Branch" or "Jump" to another part of the program, where sequential program flow re-starts. Often the later program sequence includes an instruction which "Returns" the program flow to the original program sequence.

The program portion terminated by the "Return" is often termed a "sub-routine", and Branching or Jumping to a "sub-routine" is referred to as "Calling" a sub-routine. In this way, often used functions or tasks do not need to be included throughout a program, but instead may be coded once as a sub-routine and called from the main program as necessary.

In order for the program flow to correctly recover from a sub-routine call, it is necessary to return to the location in the main program sequence immediately after the "Call". This is done by storing the program memory address of the next program after the "Call". Usually, the next program memory address is contained in a memory register called a program counter (PC), which so calls "points" to the next instruction location. When a "Call" instruction is executed the contents of the program counter are stored in (often termed "pushed to") a so-called Stack Register, which is a Last In First Out (LIFO) register. Often, context information is also pushed to the Stack Register, such as repeat loop or nested loop information. When the program "Returns" from the sub-routine the last stored address in the Stack Register is "popped" from the Stack and restored into the program counter, and the main program flow continues. Typically, the address of the next instruction to be popped from the stack, or the next available location in the stack, is stored in a so called stack pointer (SP).

Sub-routines may call other sub-routines such that the order of the addresses stored on the Stack represent returns from the various sub-routines, and eventually to the main program.

As can be seen from the foregoing, a Stack Register is an important element of a data processing apparatus. There are two types of Stack Register; software stacks in which a dedicated area of memory, either external or on-chip memory configurable by the user, is used to save the relevant data; and hardware stacks in which a set of registers in embedded memory are used to save the data. Software stacks are of large size, limited only by user definition, but they are slow to access since external memory access has to be performed. Conversely, hardware stacks are of limited size, for example 8 x 16 bit registers embedded in the data processing apparatus architecture. yet are capable of fast access compared to external memory access.

The present invention is directed to improving the performance of data processing apparatus such as, for example but not exclusively, digital signal processors.

### SUMMARY OF INVENTION

Particular and preferred aspects of the invention are set out in the accompanying independent and dependent claims. Combinations of features from the dependent claims may be combined with features of the independent claims as appropriate and not merely as explicitly set out in the claims.

In accordance with a first aspect of the invention there is provided a data processing apparatus including a split stack comprising first and second parts. The first part comprises a register disposed in a processing core of the data processing apparatus, and the second part comprises a memory device disposed externally of the processing core. The data processing apparatus is operable to couple the first part to the second part for communicating data between the first and second parts.

In accordance with a second aspect of the invention there is provided a method for operating data processing apparatus including a stack register comprising a first hardware register part embedded in a processing core of said data processing apparatus and a second software stack register part disposed in memory external to the processing core. The method comprises configuring the second software stack register part to form a last in first out memory, loading the first part with a most recent data entry for the stack register and communicating a previous data entry for the stack register from the first part to the second part.

In accordance with a third aspect of the invention there is provided a method substantially in accordance with the second aspect of the invention, and wherein the first part is loaded with a previous data entry for the stack register from the second part, corresponding to a retrieval of a most recent data entry from the first part.

An advantage of a preferred embodiment in accordance with a first. second or third aspect of the invention is that access to the first hardware register may be performed more quickly than access to conventional memory, typically situated external to the processing core. The quicker access to the register reduces the constraints on pipeline operation typically associated with conventional memory access. This is due to the fact the register access requires fewer processor cycles than a memory access. Therefore, the contents of the hardware register may be accessed quickly, whilst previous contents are loaded into it by conventional slower memory access processes. Compared with conventional systems the preferred embodiment takes about half as many processor cycles to perform a return instruction for example.

Data is typically communicated from the first part to the second part in correspondence with an update of the data in the first part, and from the second part to the first part in response to the data processing apparatus retrieving data from the first part.

Advantageously, the memory device is external to the processing core of the data processing apparatus, which provides for greater area on the processing core for functional or execution units. Optionally, the processing core area maybe reduced. Additionally, a memory based implementation for the Stack provides greater flexibility in configuring the stack, and provides greater storage density than typically possible with Stacks implemented with hardware registers.

In a particular embodiment in accordance with aspects of the invention, the data processing apparatus includes a program counter register. Data from the program counter register maybe "pushed" to the first part of the split stack, and any content stored in that first part will be transferred to the second part. Thus, program counter data maybe saved quickly by "pushing" it to a hardware register at any pipeline stage, and any previous program counter data stored in the hardware register may be saved in the second slower access part of the split stack. Consequently, the data processing apparatus is able to operate quickly and interface efficiently in relation to the hardware part of the split stack, and does not suffer from timing constraints typically associated with conventional memory access and instruction pipeline depth.

In a further preferred embodiment in accordance with aspects of the invention, there is provided a third part for the split stack. The third part is embedded in the processing core of the data processing apparatus and is configured to receive a data entry from the first part for communication to the second part of the split stack. The data entry received from the first part may be temporarily stored in the third part prior to its subsequent communication to the second part. Such a configuration and process further relieves pipeline timing constraints in that data may be "pushed" to the first part, and correspondingly the previous content of the first part may be communicated to the third part thereby reducing the possibility of the new data for the first part overwriting the old data. The old data stored in the third part may be communicated to the second part within the usual memory access time period.

In a further preferred embodiment the second part may be coupled, preferably directly, to the program counter register, for example, independently of the first part. Thus, the first part may be bypassed for transfer of data from the second part to the program counter register. By way of example, the communication of data from the second software stack register part to the program counter register independently of the hardware register may be performed in response to a second of two consecutive instructions to "pop" data from the stack register.

In accordance with the first, second, third or further embodiments of the invention. fewer processing cycles are necessary in order to store or retrieve data from the stack register. Consequently, the cycle overhead for calling and returning to or from subroutines may be reduced, and thus the efficiency of coding shorter sub-routines, for example function/macro instructions, is improved. Additionally, returns from interrupt routines may also benefit from embodiments of the invention since it improves context switching. Thus shorter sub-routines can be encoded which leads to a reduction in code size and improves the efficiency of the user/programmer and compiler for example. Additionally, there is a corresponding reduction in power consumption by the data processing apparatus. Therefore, embodiments of the invention are particularly suitable for use in portable apparatus, such as wireless communication devices. Typically such a wireless communication device comprise a user interface including a display such as liquid crystal display or a TFT display, and a keypad or keyboard for inputting data to the communications device. Additionally, a wireless communication device will also comprise an antenna for wireless communication with a radio telephone network or the like.

Further aspects and advantages of the invention will become apparent from the following description.

### BRIEF DESCRIPTION OF THE DRAWINGS

Particular embodiments in accordance with the invention will now be described, by way of example only, and with reference to the accompanying drawings in which like reference signs are used to denote like parts, unless otherwise stated, and in which:
Figure 1 is a schematic block diagram of a processor in accordance with an embodiment of the invention;
Figure 2 is a schematic diagram of a core of the processor of Figure 1;
Figure 3 is a more detailed schematic block diagram of various execution units of the core of the processor of Figure 1;
Figure 4 is schematic diagram of an instruction buffer queue and an instruction decoder controller of the processor of Figure 1;
Figure 5 is a representation of pipeline phases of the processor of Figure 1;
Figure 6 is a diagrammatic illustration of an example of operation of a pipeline in the processor of Figure 1;
Figure 7 is a schematic representation of the core of the processor for explaining the operation of the pipeline of the processor of Figure 1;
Figure 8 is a diagrammatic illustration of a processor pipeline for soft and hard stack registers:
Figure 9 is a diagrammatic illustration of a hardware stack register;
Figure 10 is a diagrammatic illustration of stack register in accordance with an embodiment of the invention;
Figure 11 is a schematic illustration of the pipline operation and timing for a CALL instruction for an embodiment of the invention;
Figure 12 is a schematic illustration of the pipline operation and timing for a RET instruction for an embodiment of the invention; and
Figure 13 is a schematic illustration of a wireless communication device suitable for incorporating in an embodiment of the invention.

### DESCRIPTION OF PARTICULAR EMBODIMENTS

Although the intention finds particular application to Digital Signal Processors (DSPs), implemented for example in an Application Specific Integrated Circuit (ASIC), it also finds application to other forms of processing engines.

The basic architecture of an example of a processor according to the invention will now be described.

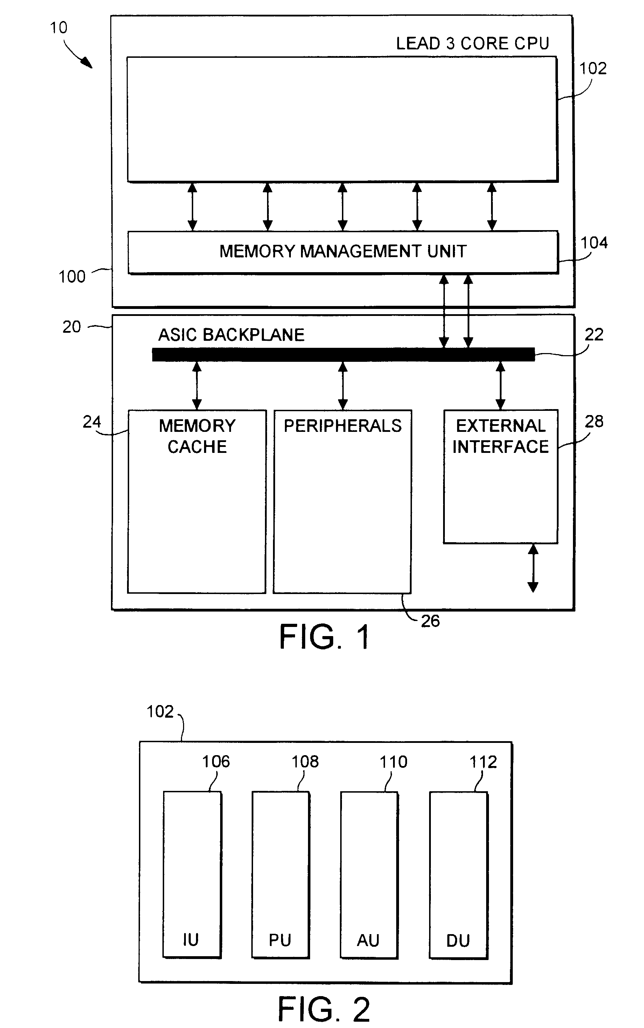

Figure 1 is a schematic overview of a processor 10 forming an exemplary embodiment of the present invention. The processor 10 includes a processing engine 100 and a processor backplane 20. In the present embodiment, the processor is a Digital Signal Processor 10 implemented in an Application Specific Integrated Circuit (ASIC).

As shown in Figure 1, the processing engine 100 forms a central processing unit (CPU) with a processing core 102 and a memory interface. or management, unit 104 for interfacing the processing core 102 with memory units external to the processor core 102.

The processor backplane 20 comprises a backplane bus 22, to which the memory management unit 104 of the processing engine is connected. Also connected to the backplane bus 22 is an instruction cache memory 24, peripheral devices 26 and an external interface 28.

It will be appreciated that in other embodiments, the invention could be implemented using different configurations and/or different technologies. For example, the processing engine 100 could form the processor 10, with the processor backplane 20 being separate therefrom. The processing engine 100 could, for example be a DSP separate from and mounted on a backplane 20 supporting a backplane bus 22, peripheral and external interfaces. The processing engine 100 could, for example. be a microprocessor rather than a DSP and could be implemented in technologies other than ASIC technology. The processing engine. or a processor including the processing engine. could be implemented in one or more integrated circuits.

Figure 2 illustrates the basic structure of an embodiment of the processing core 102. As illustrated, the processing core 102 includes four elements, namely an Instruction Buffer Unit (1 Unit) 106 and three execution units. The execution units are a Program Flow Unit (P Unit) 108, Address Data Flow Unit (A Unit) 110 and a Data Computation Unit (D Unit) 112 for executing instructions decoded from the Instruction Buffer Unit (I Unit) 106 and for controlling and monitoring program flow.

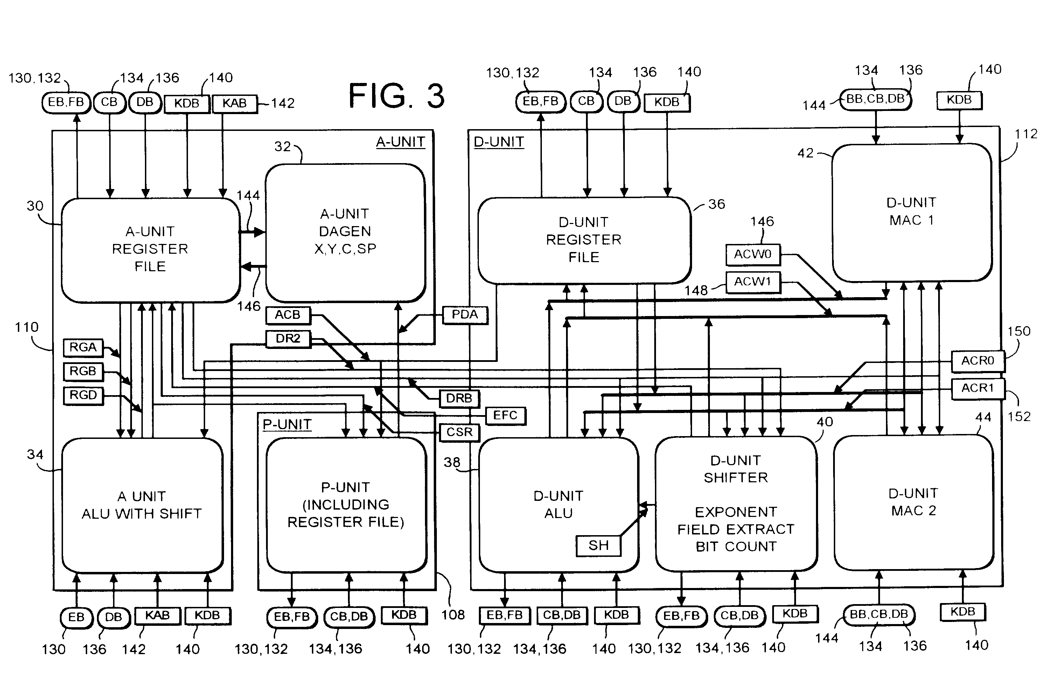

Figure 3 illustrates the P Unit 108, A Unit 110 and D Unit 112 of the processing core 102 in more detail and shows the bus structure connecting the various elements of the processing core 102. The P Unit 108 includes, for example, loop control circuitry. GoTo/Branch control circuitry and various registers for controlling and monitoring program flow such as repeat counter registers and interrupt mask, flag or vector registers. The P Unit 108 is coupled to general purpose Data Write busses (EB, FB) 130, 132, Data Read busses (CB, DB) 134. 136 and a coefficient program bus (BB) 138. Additionally, the P Unit 108 is coupled to sub-units within the A Unit 110 and D Unit 112 via various busses labeled CSR. ACB and RGD.

As illustrated in Figure 3, in the present embodiment the A Unit 110 includes a register file 30, a data address generation sub-unit (DAGEN) 32 and an Arithmetic and Logic Unit (ALU) 34. The A Unit register file 30 includes various registers, among which are 16 bit pointer registers (AR0,..., AR7) and data registers (DR0,.... DR3) which may also be used for data flow as well as address generation. Additionally, the register file includes 16 bit circular buffer registers and 7 bit data page registers. As well as the general purpose busses (EB. FB. CB, DB) 130. 132, 134. 136, a coefficient data bus 140 and a coefficient address bus 142 are coupled to the A Unit register file 30. The A Unit register file 30 is coupled to the A Unit DAGEN unit 32 by unidirectional busses 144 and 146 respectively operating in opposite directions. The DAGEN unit 32 includes 16 bit X/Y registers and coefficient and stack pointer registers. for example for controlling and monitoring address generation within the processing engine 100.

The A Unit 110 also comprises the ALU 34 which includes a shifter function as well as the functions typically associated with an ALU such as addition, subtraction, and AND, OR and XOR logical operators. The ALU 34 is also coupled to the general-purpose busses (EB, DB) 130, 136 and an instruction constant data bus (KDB) 140. The A Unit ALU is coupled to the P Unit 108 by a PDA bus for receiving register content from the P Unit 108 register file. The ALU 34 is also coupled to the A Unit register file 30 by busses RGA and RGB for receiving address and data register contents and by a bus RGD for forwarding address and data registers in the register file 30.

As illustrated, the D Unit 112 includes a D Unit register file 36. a D Unit ALU 38, a D Unit shifter 40 and two multiply and accumulate units (MAC1, MAC2) 42 and 44. The D Unit register file 36. D Unit ALU 38 and D Unit shifter 40 are coupled to busses (EB, FB, CB, DB and KDB) 130, 132, 134, 136 and 140, and the MAC units 42 and 44 are coupled to the busses (CB, DB, KDB) 134, 136, 140 and data read bus (BB) 144. The D Unit register file 36 includes 40-bit accumulators (AC0, ... AC3) and a 16-bit transition register. The D Unit 112 can also utilize the 16 bit pointer and data registers in the A Unit 110 as source or destination registers in addition to the 40-bit accumulators. The D Unit register file 36 receives data from the D Unit ALU 38 and MACs 1&2 42, 44 over accumulator write busses (ACW0, ACW1) 146, 148, and from the D Unit shifter 40 over accumulator write bus (ACW1) 148. Data is read from the D Unit register file accumulators to the D Unit ALU 38. D Unit shifter 40 and MACs 1&2 42. 44 over accumulator read busses (ACR0. ACR1) 150. 152. The D Unit ALU 38 and D Unit shifter 40 are also coupled to sub-units of the A Unit 108 via various busses labeled EFC, DRB, DR2 and ACB.

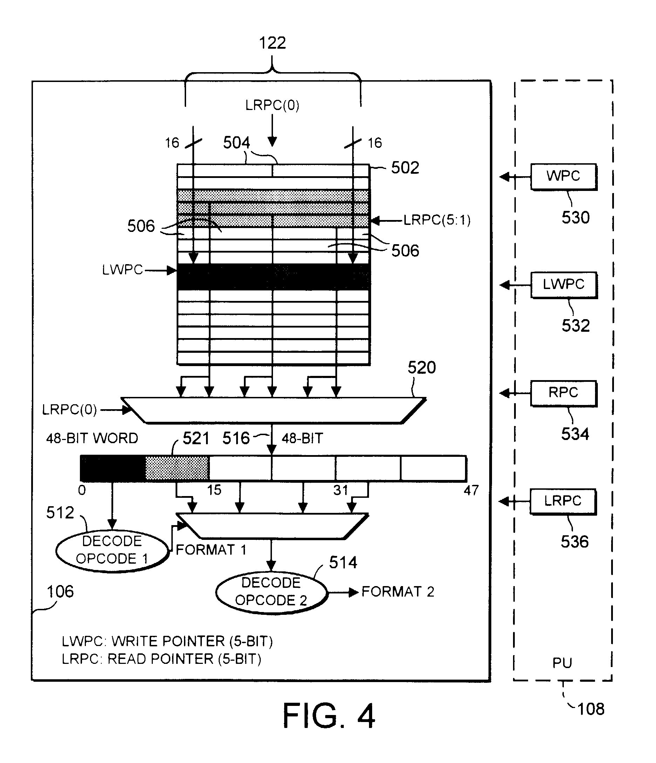

Referring now to Figure 4. there is illustrated an instruction buffer unit 106 comprising a 32 word instruction buffer queue (IBQ) 502. The IBQ 502 comprises 32×16 bit registers 504, logically divided into 8 bit bytes 506. Instructions arrive at the IBQ 502 via the 32-bit program bus (PB) 122. The instructions are fetched in a 32-bit cycle into the location pointed to by the Local Write Program Counter (LWPC) 532. The LWPC 532 is contained in a register located in the P Unit 108. The P Unit 108 also includes the Local Read Program Counter (LRPC) 536 register, and the Write Program Counter (WPC) 530 and Read Program Counter (RPC) 534 registers. LRPC 536 points to the location in the IBQ 502 of the next instruction or instructions to be loaded into the instruction decoder(s) 512 and 514. That is to say, the LRPC 534 points to the location in the IBQ 502 of the instruction currently being dispatched to the decoders 512, 514. The WPC points to the address in program memory of the start of the next 4 bytes of instruction code for the pipeline. For each fetch into the IBQ, the next 4 bytes from the program memory are fetched regardless of instruction boundaries. The RPC 534 points to the address in program memory of the instruction currently being dispatched to the decoder(s) 512 and 514.

The instructions are formed into a 48-bit word and are loaded into the instruction decoders 512, 514 over a 48-bit bus 516 via multiplexors 520 and 521. It will be apparent to a person of ordinary skill in the art that the instructions may be formed into words comprising other than 48-bits, and that the present invention is not limited to the specific embodiment described above.

The bus 516 can load a maximum of two instructions, one per decoder. during any one instruction cycle. The combination of instructions may be in any combination of formats, 8, 16. 24, 32. 40 and 48 bits. which will fit across the 48-bit bus. Decoder 1, 512. is loaded in preference to decoder 2, 514, if only one instruction can be loaded during a cycle. The respective instructions are then forwarded on to the respective function units in order to execute them and to access the data for which the instruction or operation is to be performed. Prior to being passed to the instruction decoders. the instructions are aligned on byte boundaries. The alignment is done based on the format derived for the previous instruction during decoding thereof. The multiplexing associated with the alignment of instructions with byte boundaries is performed in multiplexors 520 and 521.

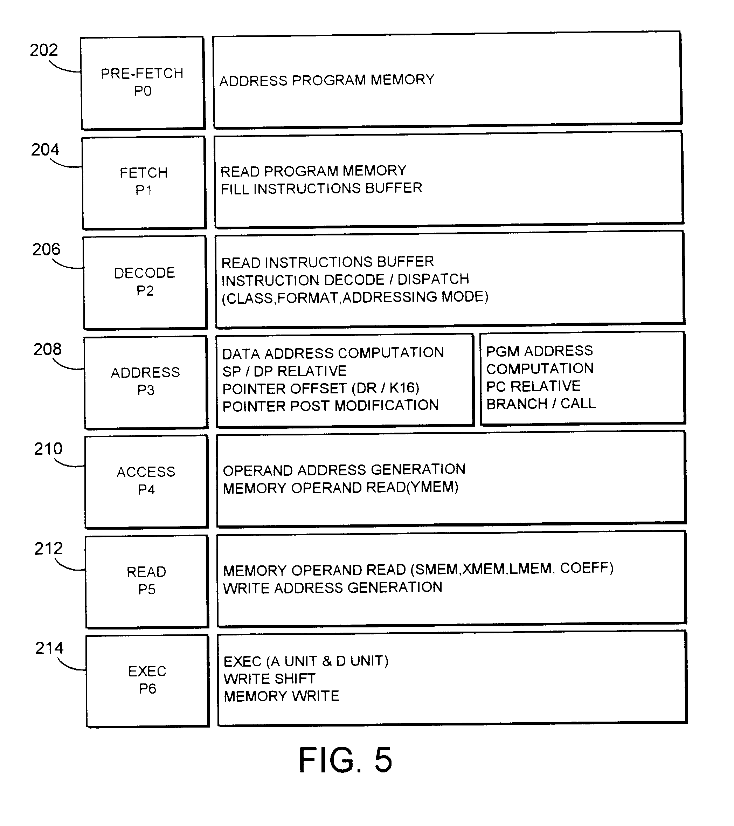

The processor core 102 executes instructions through a 7 stage pipeline, the respective stages of which will now be described with reference to Figure 5.

The first stage of the pipeline is a PRE-FETCH (P0) stage 202, during which stage a next program memory location is addressed by asserting an address on the address bus (PAB) 118 of a memory interface, or memory management unit 104.

In the next stage. FETCH (P1) stage 204, the program memory is read and the I Unit 106 is filled via the PB bus 122 from the memory management unit 104.

The PRE-FETCH and FETCH stages are separate from the rest of the pipeline stages in that the pipeline can be interrupted during the PRE-FETCH and FETCH stages to break the sequential program flow and point to other instructions in the program memory, for example for a Branch instruction.

The next instruction in the instruction buffer is then dispatched to the decoder/s 512/514 in the third stage, DECODE (P2) 206, where the instruction is decoded and dispatched to the execution unit for executing that instruction. for example to the P Unit 108. the A Unit 110 or the D Unit 112. The decode stage 206 includes decoding at least part of an instruction including a first part indicating the class of the instruction. a second part indicating the format of the instruction and a third part indicating an addressing mode for the instruction.

The next stage is an ADDRESS (P3) stage 208. in which the address of the data to be used in the instruction is computed, or a new program address is computed should the instruction require a program branch or jump. Respective computations take place in the A Unit 110 or the P Unit 108 respectively.

In an ACCESS (P4) stage 210 the address of a read operand is output and the memory operand. the address of which has been generated in a DAGEN X operator with an Xmem indirect addressing mode. is then READ from indirectly addressed X memory (Xmem).

The next stage of the pipeline is the READ (P5) stage 212 in which a memory operand, the address of which has been generated in a DAGEN Y operator with an Ymem indirect addressing mode or in a DAGEN C operator with coefficient address mode. is READ. The address of the memory location to which the result of the instruction is to be written is output.

In the case of dual access, read operands can also be generated in the Y path, and write operands in the X path.

Finally, there is an execution EXEC (P6) stage 214 in which the instruction is executed in either the A Unit 110 or the D Unit 112. The result is then stored in a data register or accumulator, or written to memory for Read/Modify/Write or store instructions. Additionally, shift operations are performed on data in accumulators during the EXEC stage.

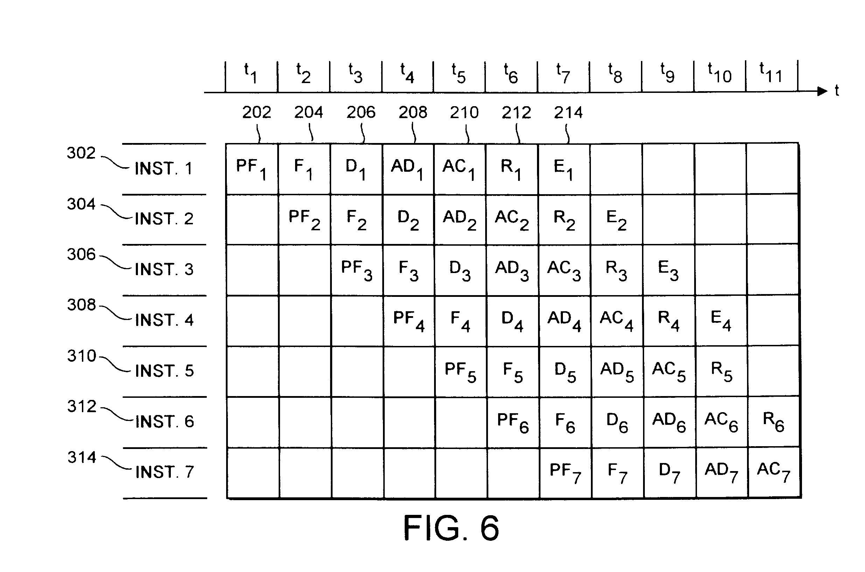

The basic principle of operation for a pipeline processor will now be described with reference to Figure 6. As can be seen from Figure 6, for a first instruction 302, the successive pipeline stages take place over time periods T₁-T₇. Each time period is a clock cycle for the processor machine clock. A second instruction 304, can enter the pipeline in period T₂, since the previous instruction has now moved on to the next pipeline stage. For instruction 3, 306, the PRE-FETCH stage 202 occurs in time period T₃. As can be seen from Figure 6 for a seven stage pipeline a total of 7 instructions may be processed simultaneously. For all 7 instructions 302-314, Figure 6 shows them all under process in time period T₇. Such a structure adds a form of parallelism to the processing of instructions.

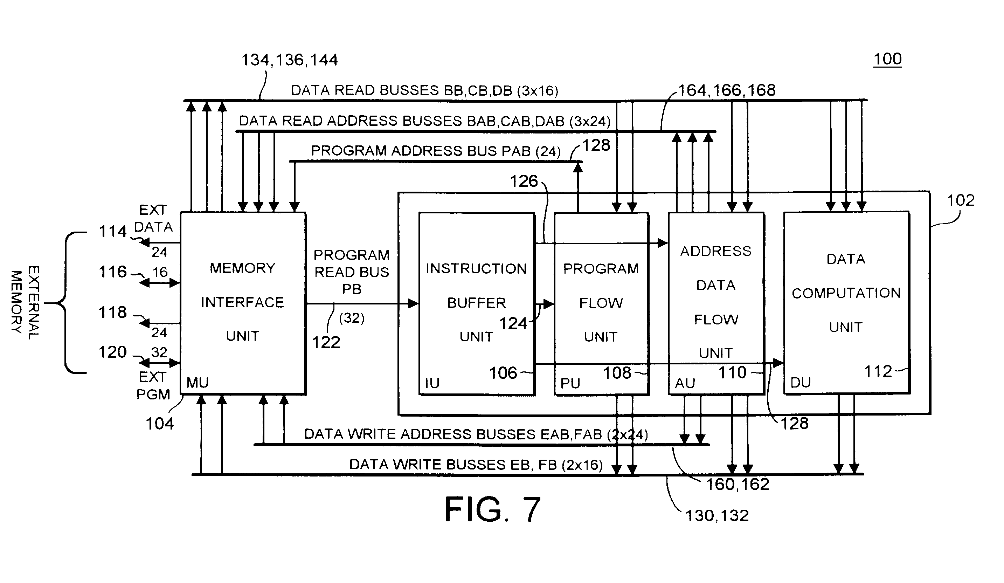

As shown in Figure 7, the present embodiment of the invention includes a memory management unit 104 which is coupled to external memory units via a 24 bit address bus 114 and a bi-directional 16 bit data bus 116. Additionally, the memory management unit 104 is coupled to program storage memory (not shown) via a 24 bit address bus 118 and a 32 bit bi-directional data bus 120. The memory management unit 104 is also coupled to the I Unit 106 of the machine processor core 102 via a 32 bit program read bus (PB) 122. The P Unit 108, A Unit 110 and D Unit 112 are coupled to the memory management unit 104 via data read and data write busses and corresponding address busses. The P Unit 108 is further coupled to a program address bus 128.

More particularly, the P Unit 108 is coupled to the memory management unit 104 by a 24 bit program address bus 128, the two 16 bit data write busses (EB. FB) 130, 132. and the two 16 bit data read busses (CB, DB) 134, 136. The A Unit 110 is coupled to the memory management unit 104 via two 24 bit data write address busses (EAB, FAB) 160, 162, the two 16 bit data write busses (EB, FB) 130, 132, the three data read address busses (BAB. CAB, DAB) 164, 166. 168 and the two 16 bit data read busses (CB, DB) 134, 136. The D Unit 112 is coupled to the memory management unit 104 via the two data write busses (EB, FB) 130, 132 and three data read busses (BB. CB. DB) 144, 134, 136.

Figure 7 represents the passing of instructions from the I Unit 106 to the P Unit 108 at 124, for forwarding branch instructions for example. Additionally, Figure 7 represents the passing of data from the I Unit 106 to the A Unit 110 and the D Unit 112 at 126 and 128 respectively.

By way of background description, a detailed explanation of the operation of software and hardware stacks will now be given. Although the description of the drawbacks are given by reference to a RET instruction, ie a return from sub-routine instruction, it will be evident to a person of ordinary skill in the art that similar drawback occur in relation to CALL instructions in which the contents of the Program Counter are pushed to the stack register.

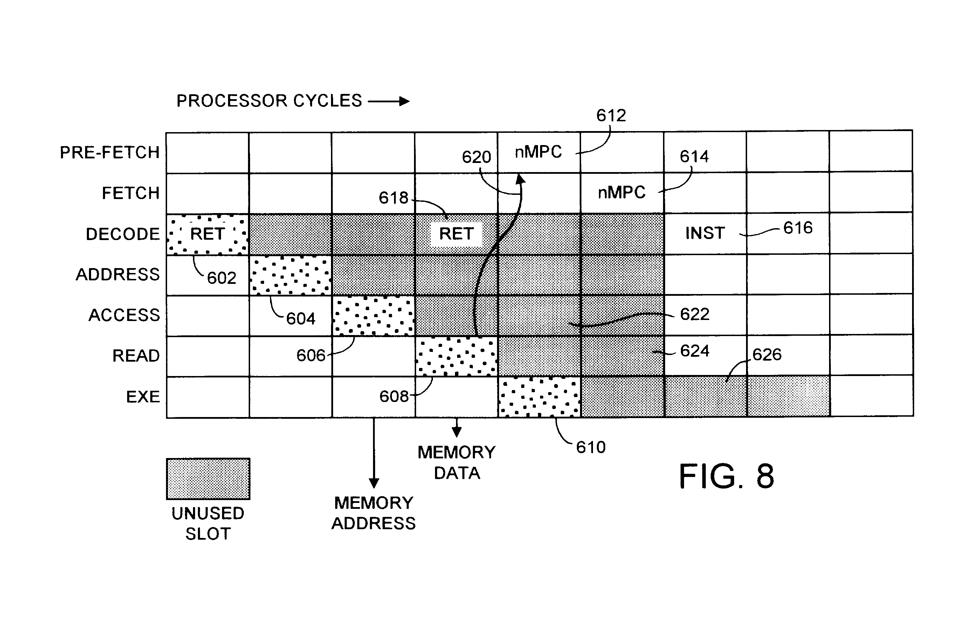

Referring to Figure 8, the operation of a return from a typically configured software stack will be described. Pipeline execution of a return instruction "RET" is schematically illustrated by way of a grid. The pipeline phases descend vertically in order of execution, and the number of processor cycles increases horizontally left to right.

A CALL instruction in a program instruction sequence will cause a Memory Write Access to save the contents of the Program Counter, and the context of the Program Counter, to the Software Stack. Thus, when the "RET" instruction occurs a Memory Read Access is performed to load the Program Counter with the last stored contents of the Software Stack, and the context.

As can be seen in Figure 8, the RET instruction 602 occurs in the Decode phase of the pipeline. The pipeline stages Address 604, Access 606, Read 608 and Exe 610 then have to be performed in order to read the external memory and load the so called Local Copy Read Program Counter (LCRPC), and its corresponding context, from the software stack. Having so loaded the program counter with nWPC, the pre-fetch 612 and fetch stage 614 of the pipeline load the next instruction into the IBQ 502, which is then decoded at cycle 616. It should be noted that the RPC is also initialised with the contents of LCRPC. As can be seen from the foregoing a total of 6 processor cycles is required to perform the RET instruction. This results in unused slots in the pipeline/cycle grid, which impairs the efficiency and power of the processor. However, the stack size and hence the number of nested calls is only limited by the external memory size and/or user definition.

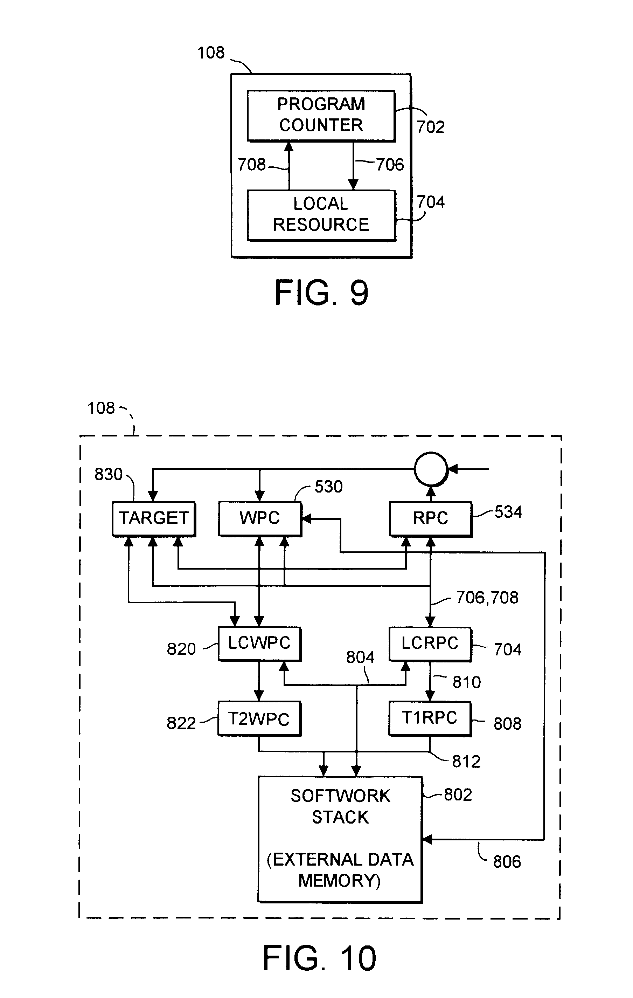

The operation of a hardware stack will now be described with reference to Figure 9. The program counter 702 is generally a memory mapped register and in a processor such as described herein may reside in the P Unit 108. A local resource 704, such as a further memory mapped register, would also typically reside embedded in the processor, for example in the P Unit 108. The local resource 704 is a set of registers configured as a hardware stack. Buses 706, 708 provide data transfer and addressing between the program counter 702 and local resource 704. Since the local resource 704 is embedded in the processor with the program counter, there is no need to access or read external memory. Referring now to Figure 8, a RET instruction (shown 618) for a hardware stack configuration immediately loads the program counter 702 with the return program counter (nWPC), shown by arrow 620. Thus, only three processor cycles are necessary to perform the RET instruction, and fewer slots are unused in the pipeline/cycle grid compared to a conventional system.

Although the hardware stack allows for fast Return, it limits the number of possible nested calls to the number of dedicated stack registers.

A preferred embodiment in accordance with the invention will now be described with reference to Figure 10, and in relation to the RPC 534.

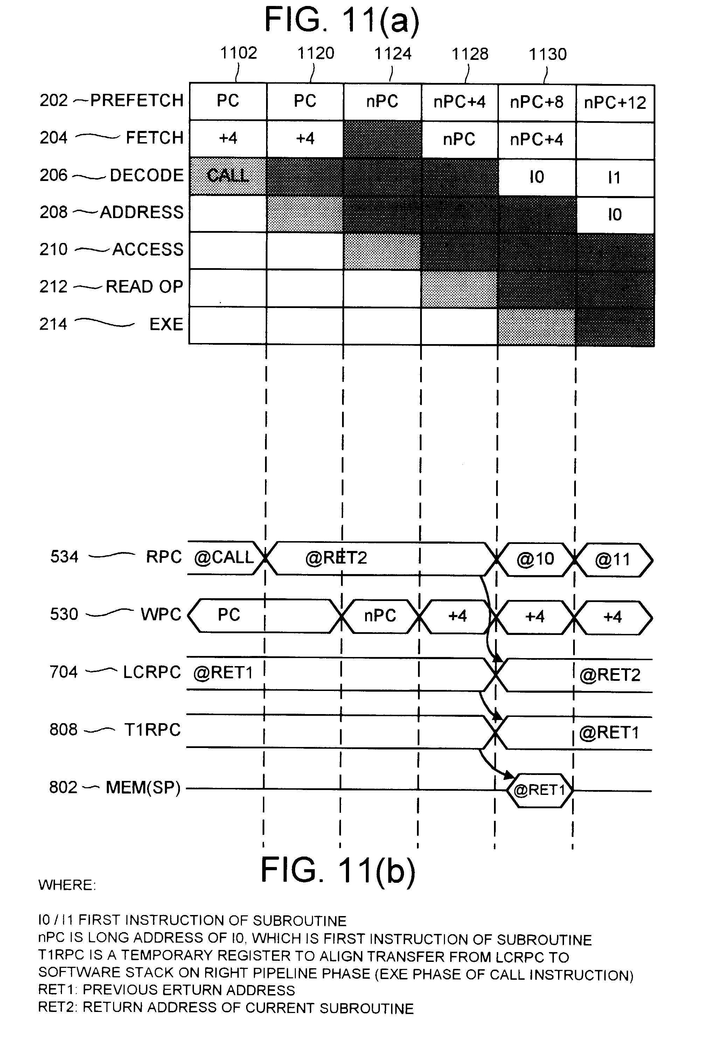

In a preferred embodiment of the invention, there is a RPC 534 and the local resource corresponds to the so called Local Copy Read Program Counter (LCRPC). Hereinafter, the term LCRPC will be used in preference to the term local resource. The RPC 534 and LCRPC 704 are embedded in the processor, for example in the P Unit 108. The LCRPC 704 is a 32 bit register, of which 24 bits are for storing the contents of the program counter and 8 bits are for storing the context. In accordance with a preferred embodiment of the invention, the processing core also includes a temporary register T1RPC 808, for temporarily storing the contents of the LCRPC. The T1RPC 808 provides for aligning the transfer of the LCRPC to the software stack in external memory 802 within the pipeline timing constraints. The role of T1RPC 808 will be further described hereinafter with reference to Figure 11. The RPC 534 and LCRPC 704 are coupled by buses 706/708 for addressing the LCRPC 704 and RPC 534, and transferring their contents to each other. The LCRPC 704 is also coupled to External Data Memory 802 via address and data buses 804. The LCRPC 704 is coupled by uni-directional bus 810 to T1RPC, and the T1RPC is coupled by uni-directional bus 812 to external memory 802.

For a CALL (to sub-routine) instruction in a program flow, the contents of the RPC 534. i.e. the address of the instruction in the program memory currently being executed, are saved to the LCRPC 704 (known as "Pushing" ), and the previous contents of the LCRPC 704 are saved to the external data memory 802. For a RET (return from a sub-routine) instruction, the RPC 534 is loaded (known as "Popping") with the next return address (nWPC) from the LCRPC 704. A Memory Read Access is performed to restore the previous value stored in the LCRPC 704 back from external data memory 802. The previous value is the next return address and next context for the next RET instruction. If a further CALL instruction should occur then the next return address and context will be stored in the external data memory 802, and a new return address will be "Pushed" to the LCRPC 704.

A by-pass bus 806 exists for use when a RET instruction is followed by a RET instruction, or a CALL instruction is followed by a CALL. The bypass bus 806 couples the contents of the stack register in external memory directly to the WPC 530, for pointing to the program memory address for the instruction to which the program flow is to return.

For consecutive CALL or RET instructions, the corresponding Push or Pop operations access the LCRPC 704 for the first CALL or RET instruction, and direcly access the external memory 802 for the second CALL or RET instruction. The access to the external memory 802 may be performed in parallel with the access to the LCRPC 704. Similar operations occur for the WPC data flow.

Operation of the preferred embodiment of the invention for the RPC data flow and with respect to the pipeline stages and timing will now be described with reference to Figure 11.

Figure 11(a) illustrates a pipeline grid showing the pipeline stages in vertically descending order and the processor cycles extending laterally. The first column 1102 shows the Prefetch stage 202 (Fetch advance) for fetching instruction code having an address (PC) shown by the Write Program Counter (WPC), and the Fetch stage 204 fetching instruction code into the IBQ 502 for the instruction "Prefetched" in the previous processor cycle, ie at the current memory location +4 bytes on from the current PC. A CALL instruction is decoded in the DECODE stage 206. Figure 11(b) illustrates the contents of the various registers and memory locations for the pipeline stages of the CALL instruction and the beginning of the Called sub-routine. For processor cycle 1102 the RPC 534 contains the address of the CALL instruction (@call) and the WPC 530 contains the current fetch program counter position (PC). The LCRPC 704 contains the previous return address (@ret1) from a previous sub-routine call. On the next processor cycle 1120. the CALL instruction is in the ADDRESS stage 208 of the pipeline and the RPC 534 contains the return address of the current sub-routine (@ret2). That is to say. RPC 534 contains the address in program memory of the instruction following the CALL instruction. Additionally,the target address for a Call using relative addressing is computed during the ADDRESS stage 208.

During the third processor cycle 1124, the CALL instruction is in the ACCESS stage 210 of the pipeline, and the WPC 530 is loaded with the address (nPC) of the first instruction, I0, of the called sub-routine. Loading WPC 530 with nPC results in the Pre-fetch stage 202 of the pipeline addressing the program memory at nPC ready for fetching instruction 10 into the IBQ 502. RPC 534 still contains @ret2. During the next processor cycle, 1128, the CALL instruction enters the READ stage 212 of the pipeline. In the Pre-fetch stage of processor cycle 1128 the WPC is increased to pre-fetch the next 4 instruction code bytes from program memory. In the Fetch stage the address of instruction 10, nPC, is asserted on the Program Address Bus 128 for loading instruction I0 into the IBQ 502. and the WPC 530 contains the address of the next 4 bytes of instruction code in program memory to be Pre-fetched. RPC 534 is updated during the READ stage, and therefore the return address @ret must be saved to LCRPC 704 and the current contents of LCRPC 704 transferred to temporary register T1RPC 808.

In the fifth processor cycle 1130, the CALL instruction enters the EXECUTE stage 214 of the pipeline. LCRPC 704 is updated with the contents of RPC 534 (@ret2), and contemporaneously temporary register T1RPC 808 is updated with the contents of LCRPC 704 (@ret1). The address of the first instruction of the sub-routine, @I0. is then loaded into RPC 534. Correspondingly, I0 enters the DECODE stage 206 of the pipeline. During the EXECUTE stage 214, the contents of T1RPC 808 are transferred to the software stack memory Mem[SP] 802, which in the preferred embodiment is in memory external to the processing core. The temporary register T1RPC 808 is used to align the transfer of the contents of LCRPC 704 to the software stack within the pipeline timing contraints, ie in the EXECUTE stage 214. This is possible by T1RPC 808 being an embedded register within the processor core along with LCRPC 704, and hence it is capable of being accessed at least as quickly as LCRPC 704 such that the contents of LCRPC 704 can be transferred to T1RPC 808 and LCRPC updated within the single EXECUTE pipeline stage. The rest of the EXECUTE stage can be used to transfer or write @ret1 to the software stack, as shown schematically by reference 802 of Fig 11 b). In the preferred embodiment. the memory write request and addressing is performed in the ACCESS stage of the pipeline.

Thus, there has been described a preferred method of transferring current and previous read and write program counts to respective parts of a split stack.

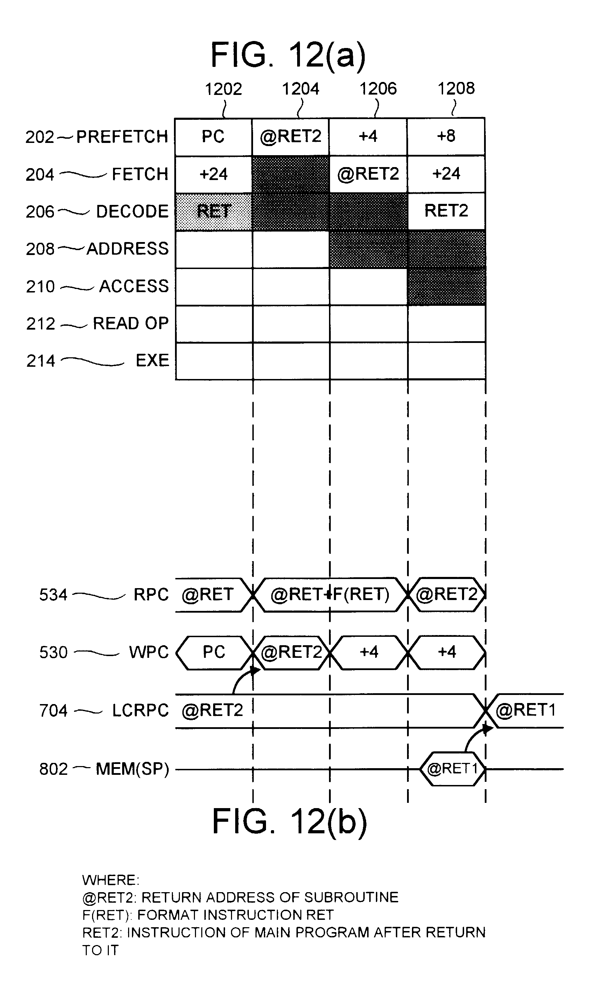

The transfer of data from a split stack for a RET instruction in accordance with the preferred embodiment of the invention will now be described with reference to Figure 12. The initial conditions for the processing machine are illustrated in Figure 12 by reference to the first processor cycle 1202, and show that the processing machine program flow is currently in a sub-routine. For processor cycle 1202, the RET instruction is in the DECODE stage 206 of the processor pipeline, and RPC 534 contains the address (@ret) in program memory of the RET instruction currently being decoded. WPC 530 contains the current program count (ie program memory address) and LCRPC is the return address (@ret2) for the current sub-routine. In the next processor cycle, 1204, the RET instruction enters the ADDRESS stage, 210, of the processor pipeline and the (@ret) of the RET instruction is restored to RPC 534 and the address of the next instruction after the RET instruction is computed based on the format of the RET instruction. However, this instruction is not executed. The contents of LCRPC 704 are transferred to the WPC 534 and also to the TARGET register 830 such that WPC holds the return address (@ret2) of the current sub-routine. Thus, the instruction at address @ret2 is asserted onto the PAB 128 during the corresponding Pre-fetch stage 202. In processor cycle 1206 the instruction at the return address for the current sub-routine is fetched into the IBQ 202 and the WPC advanced by 4 bytes. In processor cycle 1208 the main program instruction, ret 2, returned to from the sub-routine enters the DECODE stage 1206 of the processor pipeline, and RPC 534 is updated from the TARGET register 830 and therefore correspondingly points to the address @ret2. On the EXECUTE stage 214 of the RET instruction the contents of the top of the software stack, the return address (@ret1) of the previously called sub-routine, are transferred to LCRPC 704 ready for transfer to WPC 354 for the next RET instruction.

The preferred embodiment of the invention combines the advantages of the software and hardware stack by providing improved CALL or RET instruction performance. whilst also providing a stack with a user definable depth. Additionally, pipelined hardware stack register access can be implemented by providing only a few hardware registers acting as an interface to the software stack register in the processor architecture. This provides the advantage of a solely hardware stack register but also the flexibility of a software stack.

In view of the foregoing description it will be evident to a person skilled in the art that various modifications may be made within the scope of the invention. For example, the data memory 802 need not be external. Additionally, the program counter nor local resource need to be located in the Program Flow Unit. The local resource register size is not limited to that described above, but may be of any suitable size, and the number of hardware local resource registers is not limited to one. Also, where only a single CALL instruction is used neither LCRPC nor T1RPC are used, and the return address is saved in the hardware register which takes just a single processor cycle. This saves power since there is no memory access.

Optionally, LCRPC may be loaded with an "error address" such as the address of an error message. This is useful during software developmentsince the error address will be accessed if thereis an inconsistency between the balance of the CALL and RET instructions.

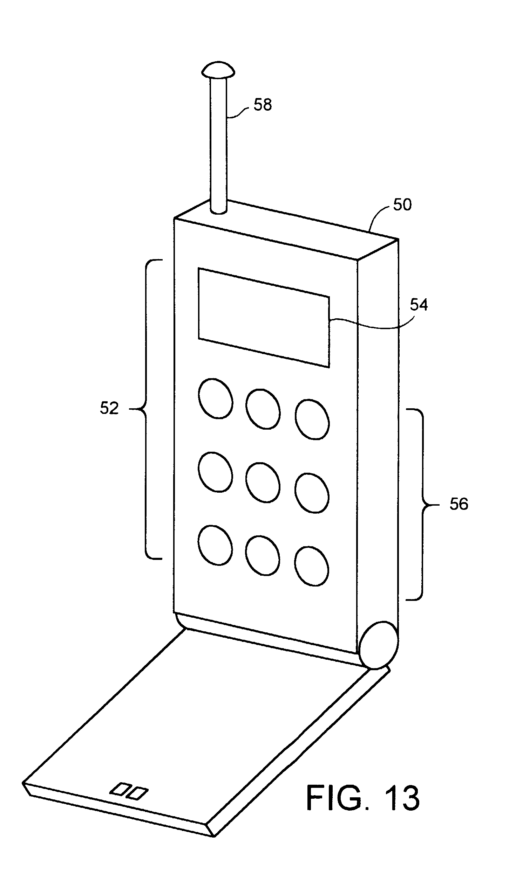

Both LCRPC and T1RPC need not be limited to the foregoing described uses, but may be utilised for other functions.
Embodiments of the invention are suitable for wireless communication devices such as a radio telephone 50 illustrated in Fig. 13. Such a radio telephone 50 comprises a user interface 52 including a display 54 such as a liquid crystal display, and a key pad 56. The radio telephone also includes a transceiver, not shown, and an antenna 58.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features of respective independent claims may be combined any appropriate manner and not merely in the specific combinations enumerated in the claims.

## Claims

1. Data processing apparatus including a split stack comprising first and second parts, the first part comprising a register disposed in a processing core of the data processing apparatus and the second part comprising a memory device disposed externally of the processing core, said data processing apparatus operable to couple said first part to said second part for communicating data between said first part and said second part.

2. Data processing apparatus according to claim 1, operable to communicate data from said first part to said second part in correspondence with an update of the data in said first part.

3. Data processing apparatus according to claim 1 or claim 2, operable to communicate data from said second part to said first part responsive to said data processing apparatus retrieving data from said first part.

4. Data processing apparatus according to any preceding claim, operable to communicate data for the stack to said first part and to store a previous data entry for the stack in said second part.

5. Data processing apparatus according to any preceding claim, operable to communicate a previous data entry from said second part to said first part.

6. Data processing apparatus according to any preceding claim, wherein said first and second parts are couplable via a data bus for the data processing apparatus.

7. Data processing apparatus according to any preceding claim. wherein the second part is configurable as a Last In First Out memory for storing data communicated to said second part.

8. Data processing apparatus according to any preceding claim, wherein the second part comprises external memory.

9. Data processing apparatus according to any preceding claim, comprising a program counter register.

10. Data processing apparatus according to claim 9, operable to load said first part with a program counter value.

11. Data processing apparatus according to claim 10, operable to load said first part with context information.

12. Data processing apparatus according to claim 11, wherein said context information comprises a flag.

13. Data processing apparatus according to claim 11 or claim 12, wherein said context information is indicative of a loop state.

14. Data processing apparatus according to any of claims 9 to 13, operable to couple said second part to the program counter register independently of said first part for bypassing said first part.

15. Data processing apparatus according to any preceding claim further comprising a third part embedded in said processing core, said data processing apparatus operable for said third part to receive a data entry from said first part for communication to said second part of said split stack.

16. Data processing apparatus according to claim 15, wherein said third part comprises a hardware register.

17. A processor comprising data processing apparatus according to any preceding claim.

18. A digital signal processor comprising data processing apparatus according to any of claims 1 to 16.

19. An integrated circuit comprising data processing apparatus according to any of claims 1 to 16.

20. A processor comprising a register disposed in a processing core and configurable for use in data processor apparatus according to any of claims 1 to 16.

21. A method for operating data processing apparatus including a stack register comprising a first hardware register part embedded in a processing core of said data processing apparatus and a second software stack register part disposed in memory external to said processing core, the method comprising configuring said second software stack register part to provide a first in first out memory, loading said first part with a most recent data entry for the stack register, and communicating a previous data entry for said stack register from said first part to said second part.

22. A method according to claim 21 for operating data processing apparatus further including a third part comprising a second hardware register embedded in said processing core, the method further comprising communicating said previous data entry to said second part via said third part.

23. A method according to claim 22, further comprising temporarily storing said previous data entry in said third part.

24. A method for operating data processing apparatus including a stack register comprising a first hardware register part embedded in a processing core of said data processing apparatus and second software stack register part disposed in memory external of said processing core, the method comprising configuring said second software stack register part to provide a last in first out memory, and loading said first part with a previous data entry for the stack register from said second part corresponding to retrieval of a most recent data entry from said first part.

25. A method according to any of claims 21 to 24, wherein said first hardware register comprises a single register.

26. A method according to any of claims 21 to 25, wherein the data processing apparatus includes a program counter, the method further comprising, popping said most recent data entry from said first part to said program counter, and communicating said previous data entry from said second part to said first part.

27. A method according to any of claims 21 to 25, wherein the data processing apparatus includes a program counter, the method further comprising pushing program counter data to said first part thereby forming said most recent data entry, and communicating said previous data entry from said first part to said second part.

28. A method according to claims 21 to 27 comprising interpreting an instruction for said processing core associated with said stack register to initiate communication of data between the first and second part.

29. A method according to claim 26 or 28, comprising interpreting a return from sub-routine instruction for said processing core to initiate popping said most recent data entry from said first part.

30. A method according to calaim 29, wherein said return comprises a return from an interrupt sub-routine.

31. A method according to claim 27 or 28, comprising interpreting a go to instruction for said processing core to initiate pushing said program counter data to said first part.

32. A method according to claim 26 or claim 29 or claim 30, comprising communicating said previous data entry from said software stack register to said program counter independent of said hardware register responsive to a second of two consecutive instructions to pull data from the stack register.

33. A method according to claim 32, further comprising coupling said software stack register to said program counter thereby bypassing said hardware register.

34. A method for operating a processing engine according any of claims 1 to 18 for software code development, comprising storing an address of an error message in said hardware register.

35. A telecommunications device comprising a digital signal processor according to claim 18.

36. A telecommunications device comprising a data processing apparatus operable in accordance with any of claims 21 to 33.

37. A wireless communication device comprising a telecommunications device according to claim 34 or 35, a user interface including a display, a keypad or keyboard for inputting data to the communications device, a transceiver and an antenna.
